# EUROPEAN PATENT SPECIFICATION

(11) **EP 2 403 708 B1**
(45) Date of publication and mention of the grant of the patent: **23.01.2013**
(21) Application number: 10706270.5
(22) Date of filing: 05.03.2010
(51) Int. Cl.: B29C 70/48, B29C 33/34, B29L 31/08

(54) **METHOD FOR MANUFACTURING WIND TURBINE BLADES**
VERFAHREN ZUR HERSTELLUNG VON WINDTURBINENSCHAUFELN
PROCÉDÉ POUR FABRICATION DE PALES D'ÉOLIENNE

(30) Priority: 06.03.2009 EP 09154538
(43) Date of publication of application: 11.01.2012
(73) Proprietor: LM Glasfiber A/S, 6000 Kolding (DK)
(72) Inventor: MORTENSEN, Ivan Engmark, DK-6000 Kolding (DK)
(74) Representative: Kitchen, Steven Richard
(86) International application number: PCT/EP2010/052802
(87) International publication number: WO 2010/100251

(56) References cited:
- EP-A- 1 310 351
- DE-A1-102007 037 072
- US-A- 4 133 711
- US-A- 4 383 818
- US-A- 4 591 402
- DRAGONI L ET AL: "HERSTELLUNG VON VERBUNDWERKSTOFF-BAUTEILEN FUR DIE KFZ-INDUSTRIE" KUNSTSTOFFE, CARL HANSER VERLAG, MUNCHEN, DE, vol. 79, no. 7, 1 July 1989 (1989-07-01), pages 581-585, XP000046453 ISSN: 0023-5563
- MAPLESTON P: "IMPROVED PREFORM TECHNOLOGY BOOSTS PROSPECTS FOR HIGH-SPEED RTM, SRIM" MODERN PLASTICS INTERNATIONAL, MCGRAW-HILL,INC. LAUSANNE, CH, vol. 19, no. 11, 1 November 1989 (1989-11-01), pages 48-52, XP000115460 ISSN: 0026-8283
- SULZBACH H-M: "TECHNIK DER RATIONELLEN GROSSSERIENFERTIGUNG VON PUR-FORMTEILEN FURDEN AUTOMOBILBAU" KUNSTSTOFFBERATER, 201975 1, vol. 34, no. 5, 1 May 1989 (1989-05-01), pages 30-35, XP000114246 ISSN: 0172-6374

## Description

### Technical field

The present invention relates to a method for manufacturing wind turbine blades having a composite shell structure comprising a matrix material and a fibre reinforcement material by use of a resin transfer moulding process.

### Background Art

It is known to manufacture wind turbine blades using project oriented manufacturing methods, e.g. where each of the wind turbine blades are moulded and assembled at the same work shop, whereafter the wind turbine blade optionally is moved to another work shop, typically a finishing work shop, where the wind turbine blade is cut, trimmed, painted and the final fittings are mounted on the wind turbine blade. The wind turbine blades are often made of fibre-reinforced polymer and are usually manufactured as shell parts in moulds, where the top side and the bottom side of the blade profile (typically the pressure side and suction side, respectively) are manufactured separately by arranging glass fibre mats in each of the two mould parts and injecting a liquid resin, which subsequently is cured. Afterwards, the two halves are glued together, often by means of internal flange parts. Glue is applied to the inner face of the lower blade half before the upper blade half is lowered thereon or vice versa. Additionally, one or two reinforcing profiles (beams) are often attached to the inside of the lower blade half prior to gluing to the upper blade half.

The shell parts for the wind turbine blade are typically manufactured as fibre composite structures by means of VARTM (vacuum assisted resin transfer moulding), where liquid polymer, also called resin, is filled into a mould cavity, in which fibre reinforcement material priorly has been inserted, and where a vacuum is generated in the mould cavity, hereby drawing in the polymer. The polymer can be thermoset plastic or thermoplastics.

Vacuum infusion or VARTM is a process used for moulding fibre composite mouldings, where uniformly distributed fibres are layered in one of the mould parts, the fibres being rovings, i.e. bundles of fibre bands, bands of rovings, or mats, which are either felt mats made of individual fibres or woven mats made of fibre rovings. The second mould part is often made of a resilient vacuum bag, and is subsequently placed on top of the fibre reinforcement material. By generating a vacuum, typically 80% to 95% of the total vacuum, in the mould cavity between the inner side of the mould part and the vacuum bag, the liquid polymer can be drawn in and fill the mould cavity with the fibre reinforcement material contained herein. So-called distribution layers or distribution tubes, also called inlet channels, are used between the vacuum bag and the fibre reinforcement material in order to obtain as sound and efficient a distribution of polymer as possible. In most cases, the polymer applied is polyester or epoxy, and the fibre reinforcement is most often based on glass fibres and/or carbon fibres.

It is commonly known that moulds for making large articles, such as wind turbine blades, can consist of two mould parts that are closed about a longitudinal hinge line, where the hinges are passive, i.e. a crane is used to lift one of the mould parts about the hinge line for closure and opening of the mould. When making wind turbine blades, the mould is closed so as to glue two blade shell halves together, said shell halves being produced in separate mould parts. Alternatively, wind turbine blades can be manufactured as disclosed in EP 1 310 351.

However, as the demand for wind turbines is rapidly increasing it is found increasingly difficult to scale the conventional project oriented manufacturing method to accommodate the demand for several reasons as listed in the following: Firstly, the project oriented manufacturing method requires that all the materials required for manufacturing a wind turbine blade, e.g. resin and fibre reinforcement material, has to be transported to every work shop, which is logistically demanding. Secondly, every work shop has to be equipped with tools and gear necessary for every single manufacturing step in the process, which yields an overhead of resources. Additionally, the conventional project oriented manufacturing method requires a mould in every single work shop, which is expensive, since production and maintenance of moulds are time consuming and thus expensive. Furthermore, the conventional project oriented manufacturing method occupies a lot of space, and since the workers at each work shop have to perform a variety of manufacturing steps, there is a risk that the quality of the manufactured wind turbine blades may suffer.

While volume production of parts made of fibre reinforced materials is known from e.g. car production, such production methods are not easily transferred and/or adapted to the production of wind turbine blades with a length of 30m - 50m or even more, where an empty mould may easily have a weight of 20-30 tons or more, and where each mould is a considerable cost factor.

For example, US 4,383,818 discloses a method for mass production of car bodies using a Vacuum Assisted Resin Injection (VARI) process, where a large number of substantially identical moulds are continously propelled around on an oval shaped path, each mould being supported on a wheeled bogie, wherein the bogies are linked together in a long chain. While the document alleges that the assembly line would also be suited for other types of structural bodies, and mentions snowmobiles, or boats as examples, the disclosure is silent as to how large such structural bodies may be. Furthermore, no disclosure or indications are given to the skilled person how to modify the disclosed assembly line in order to produce large parts by a Vacuum Assisted Resin Transfer Moulding Process (VARTM) that are more than ten times bigger than a car body. In fact, such an assembly line, where a large number of moulds weighing 30 tons each are continously propelled around on an oval shaped path, is not realistic as an economically viable solution for producing wind turbine blades with a length of up to 50m or more. Furthermore, such a solution is not flexible with respect to the types of wind turbine blades to be produced and does not allow dynamically adapting the production to varying order schemes.

WO-A-2004/043679 discloses the features of the preamble of claim 1.

As a consequence, so far, wind turbine production still relies on the above mentioned project oriented manufacturing methods involving highly skilled human labour. Therefore, there is a need for a method and production facility for large wind turbine blades that allows increasing throughput, optimises the use of expensive moulds and/or the use of skilled labour in order to improve the quality and cost-effectiveness of the production process.

It is therefore an object of the invention to obtain a new method and manufacturing line for manufacturing wind turbine blades, which both overcomes or ameliorates at least one of the disadvantages of the prior art or which provides a useful alternative.

### Disclosure of Invention

The object of the invention is obtained by a method as defined in claim 1 and which comprises a manufacturing line, where wind turbine blades are formed in a number of moulds, each of the number of moulds comprising at least a first mould part comprising a first mould cavity, the manufacturing line further comprises a number of separate work stations, where separate manufacturing steps are carried out, wherein the method comprises the following steps: a) arranging the fibre reinforcement material in a first mould cavity of a first mould part at a first work station, b) moving the first mould part with the fibre reinforcement materials by use of conveying means to a second work station having a different position than the first work station, and c) supplying a curable matrix material into the first mould cavity of the first mould part at the second work station. Hereby, a method is provided whereby wind turbine blades can be manufactured using fewer resources e.g. moulds and tools, or alternatively improving the throughput as the method increases the number of manufactured wind turbine blades per time unit compared to conventionally project oriented manufacturing methods. As an example, the method can in a setup with three work stations and three moulds increase the throughput from 3 to 6 wind turbine blades per 24 hours. Since the mould sets are movable in relation to the work stations, the method furthermore provides that each work station can be equipped with specialized and advanced equipment that is dedicated to the manufacturing step carried out at each work station, as the method reduces the required number of work stations. Additionally, each work station can be manned with specialized workers that are skilled and trained in the manufacturing step carried out at that particular work station. However, some of the work stations can also be automated, e.g. by using robots, such that fewer workers are needed. Automation is also expected to additionally improve the quality of the manufactured wind turbine blades having a length of at least 30 meters.

In step c) the curable matrix material is infused. The matrix material is typically a resin such as polyester, vinylester, or epoxy.

The matrix material is injected by use of vacuum assisted resin transfer moulding (VARTM), wherein an underpressure is formed in the mould cavity, thereby drawing the liquid resin into the mould cavity.

The conveying means comprises at least four wheels and/or rollers mounted on each of the number of moulds, whereby the number of moulds easily can be moved. The conveying means may also comprise rails or tracks on which the moulds can be transported.

According to one embodiment, the method comprises the following step: d) moving the first mould part, while the matrix material is curing, by conveying means from the second work station to a third work station having a different position than the first and the second work station. Hereby, the method reduces the manufacturing time, as the first mould is being moved from the second work station to the third work station while the matrix material that was infused in step b) is still curing.

In another embodiment, the first mould comprises at least a first mould part and a second mould part that can be assembled to form a closed mould assembly, each mould part comprising a mould cavity. Thus, each mould part can be used so as to form separate shell parts of a wind turbine blade. The shell parts are typically constructed as a lower part, e.g. a suction side, of the blade, and an upper part, e.g. a pressure side, of the blade. The shell parts are then later adhered to each other, e.g. by gluing flanges located at the leading edge and trailing edge of the finished wind turbine blade. Thus, the mould part comprises a moulding surface, which defines a part of the outer side of the finished blade. The mould cavity of each mould part can be formed by sealing a vacuum bag to the mould part. A vacuum source can be coupled to the mould cavity so that the mould cavity can be evacuated prior to injecting the liquid matrix material.

The method can comprise an additional step that follows step d), which comprises removing the vacuum bags from each of the separate mould parts.

In another embodiment, the method comprises the following steps: e) assembling the separate mould parts of the first mould and applying an adhesive between the shell parts, f) moving the first mould, while the adhesive is curing, by conveying means from the third work station to the first work station.

In another embodiment, the method comprises the following step: g) opening the closed mould assembly at the first work station and removing the manufactured wind turbine blade. Hereby, the method provides that the handling of the first mould is optimized, as the first mould is opened at the first work station, which is the same work station where the first mould is reused for manufacturing yet another wind turbine blade by repeating the method.

In another embodiment, the number of moulds is at least the same as the number of work stations on the manufacturing line, and the moulds are circulated in a permutated manner between the work stations, such that a continuous manufacturing line is established. Hereby, the method provides that a continuous manufacturing line is established as the work stations can perform work on at least one mould at the time, until the moulds are circulated. The method is particularly efficient if the process time is similar for each work station, such that the moulds can move synchronously. However, in the case that the work stations has significant differences in process time, additional moulds can be added to the manufacturing line, such that a buffer zone is established. In a preferred embodiment the manufacturing line comprises 3 moulds and 3 work stations. In another embodiment step b) and d) is each performed within 15 minutes, whereby the method by the conveying means provides an effective and quick transportation of the moulds. To achieve a manufacturing line with a continuous flow, it is not only important that the process time at each work station is similar, but also that the time it takes to move the moulds is similar. In another embodiment, step a) and c) is each performed within 1 or at least 2 hours and in yet another embodiment, one full circulation of the number of moulds on the manufacturing line is performed within 12 hours, whereby the method provides that e.g. 6 wind turbine blades can be manufactured in a preferred embodiment with 3 moulds and 3 work stations, which is twice as many manufactured wind turbine blades as compared to the number a conventional project oriented manufacturing method can produce in a similar setup with 3 moulds. Furthermore, a 12 hour cycle is compatible with typical working shifts at a manufacturing facility.

In another embodiment the process steps comprise one or more fixed process steps that are dedicated to a given work station or a given type of work station, e.g. with specialised equipment and/or serviced by a specialised team of workers, such as work stations for lay-up work, resin infusion, or work related to blade half assembly (e.g. glueing/closure of mould parts).

In another embodiment the process steps comprise one or more flexible process steps that can be switched between work stations. In a serial manufacturing line the flexible process steps may be moved backwards and/or forwards between subsequent work stations of the manufacturing line. Examples for such flexible process steps are curing of the gel coat of the moulds, infusion media, application of vacuum, preparation for closing a mould, and rework of the blade halfs before closing.

In a preferred embodiment the process steps comprise fixed and flexible process steps. Configuring a serial manufacturing method/manufacturing line to use a combination of fixed and flexible steps allows both to maintain the advantages of dedicated work stations, i.e. work stations that are dedicated to certain process steps, and a dynamic allocation of production resources in order to further improve facility/capacity utilisation.

Moulds may be moved between work stations, wherein fixed process steps are performed at dedicated work stations and flexible process steps are performed at work stations that are available. When needed, the moulds may be fixed in accurate position. The dedicated work stations may be equipped with specialized and advanced equipment that is dedicated to the manufacturing step carried out at the dedicated work station with the above mentioned advantages thereof. Additionally as mentioned above, each work station can be manned with specialized workers that are skilled and trained in the manufacturing step carried out at that particular work station.

In a serial manufacturing line, each of the moulds are moved from one works station to the subsequent work station of the manufacturing line. Preferably, the flow of the moulds from workstation to workstation through the manufacturing line is controlled according to a cycle time. The cycle time may be dynamically set to a current cycle time, wherein the minimum current cycle time at each time is essentially determined by the time required for the longest process step currently performed in the line. Flexible process steps to be performed between two subsequent fixed process steps of two subsequent work stations may be allocated to either of the two work stations. The flexible process steps may thus be switched backwards and/or forwards between subsequent work stations in the manufacturing line to bring the time spent on performing a number of process steps at each work station as close as possible to the current cycle time, thereby improving capacity utilisation.

In another embodiment, the moulds are moved between work stations according to a production scheme taking into account the cycle times of different types of blade to be produced concurrently and/or the actual time required for each process step. Thereby, the facility/capacity utilisation may be further improved, e.g. by moving flexible process steps to available work stations, wherein availability may be determined using the production scheme. While it is possible to maintain the advantages of dedicated work stations, this allows for a dynamic allocation of production resources according to the cycle times of different types of blade to be produced concurrently and/or according to the time per process step. This is particularly advantageous for the flexible and efficient operation of a manufacturing facility, e.g. when producing different types of blades with different cycle times. Also the time for each of the process steps may vary, typically in a range between 1 % and about 17% of the total cycle. As in the above mentioned embodiments, the moulds may be moved so as to switch flexible process steps backwards and/or forwards between subsequent work stations in the manufacturing line to improve capacity utilisation.

In another embodiment, the moulds are moved substantially in a longitudinal direction (L) of the moulds, when being moved by the conveying means, i.e. in the direction parallel to the direction from a blade root to a blade tip.

In another embodiment, the fibre reinforcement material is dry, e.g. not pre-impregnated with resin, when arranged in the number of moulds. However, the method can also be performed with pre-impregnated fibre reinforcement material or a semi-impregnated fibre reinforcement material. The fibre reinforcement material and/or additional reinforcement material, that can be pre-impregnated, is preferably arranged in the moulds such that a longitudinal reinforcement structure is formed and provides mechanical strength to the manufactured wind turbine blade.

In another embodiment, the method further comprises a finalisation line having a number of finishing stations. Hereby, the method provides that the manufactured wind turbine blades can be finished. The finishing stations comprises a quality inspection station, a cut and trim station, a finish station and a painting station, where the cut and trim station and the painting station can be automated. The finalisation line is preferably placed in the same production hall as the manufacturing line, thus separate air cleaning facilities are required for some of the finishing stations to maintain a clean and acceptable working enviroment in the production hall.

In another embodiment, the first work station on the manufacturing line and the first finishing station on the finalisation line are juxtaposed. Thereby, the manufactured wind turbine blade, when removed from the first mould, only needs to be transported a short distance to the first finishing station. Furthermore, the handling of the first mould and the manufactured wind turbine blade is minimized. The manufacturing line and the finalisation line can also be arranged in parallel.

In another embodiment, the wind turbine blade is moved by crane means from the first work station on the manufacturing line to the first finishing station on the finalisation line.

In another embodiment, the number of moulds have different shapes and/or lengths, such that the method produces wind turbine blades with different properties. Hereby, the method provides that wind turbine blades with different shapes and/or lengths can be manufactured by the same manufacturing line and/or finalisation line, thus separate lines for each wind turbine blade type is not necessary, which makes the method even more cost-effective.

The manufacturing line may comprise a number of moulds, the number being greater than one, where wind turbine blades are formed in, each of the number of moulds comprising at least a first mould part comprising a first mould cavity, and in that the manufacturing line further comprises a number of separate work stations and in that each of the number of moulds are movable along the manufacturing line by conveying means. Hereby, a manufacturing line is provided where a continuous production of wind turbine blades is possible. The manufacturing line requires fewer resources e.g. moulds and tools, or alternatively improves the throughput as compared to conventionally project oriented manufacturing methods. The manufacturing line can, as an example, in a setup with three moulds and one gantry means increase the number of manufactured wind turbine blades from 3 to 6 wind turbine blades per 24 hours. The manufacturing line can additionally be automated, which is expected to further improve the throughput and additionally the quality of the manufactured wind turbine blades.

The number of work stations can be arranged in longitudinal extension of a first workstation. The manufacturing line can further comprise a finalisation line comprising a number of finishing stations comprising a quality inspection station, a cut and trim station, a finish station and/or a painting station, where the cut and trim station and the painting station can be automated. The finalisation line is preferably placed in the same production hall as the manufacturing line, thus separate air cleaning facilities are required for some of the finishing stations to maintain a clean and acceptable working environment in the production hall. The finalisation line is preferably arranged in parallel and/or juxtaposed to the manufacturing line. The manufacturing line can comprise moulds with different shapes, geometry and/or lengths, such that the manufacturing line can produce wind turbine blades with different properties, and not only one type and/or size of wind turbine blades. However, the manufacturing line produces wind turbine blades having a length of at least 30 meters, or preferably at least 40 meters, or 50 meters. Furthermore, the fibre reinforcement material used at the manufacturing line is dry, e.g. not pre-impregnated with resin, when arranged in the number of moulds. However, the manufacturing line can also handle pre-impregnated fibre reinforcement material and/or semi-impregnated fibre reinforcement material. The fibre reinforcement material and/or additional reinforcement material, that can be pre-impregnated, is preferably arranged in the moulds such that a longitudinal reinforcement structure is formed and provides mechanical strength to the manufactured wind turbine blade.

### Brief Description of the Drawings

The invention is explained in detail below with reference to an embodiment shown in the drawings, in which
Fig. 1 shows a prior art wind turbine,
Fig. 2 shows a wind turbine blade,
Fig. 3 shows a manufacturing line with a first mould during step a) and c) according to the invention,
Fig. 4 shows a manufacturing line with a first mould during step a), c) and e) according to the invention,
Fig. 5 shows a manufacturing line with a first, second and third mould during step a), c) and e) according to the invention, and
Fig. 6 shows a manufacturing line with a first, second and third mould during step a), c) and e) and a finalisation line according to the invention.

### Detailed description

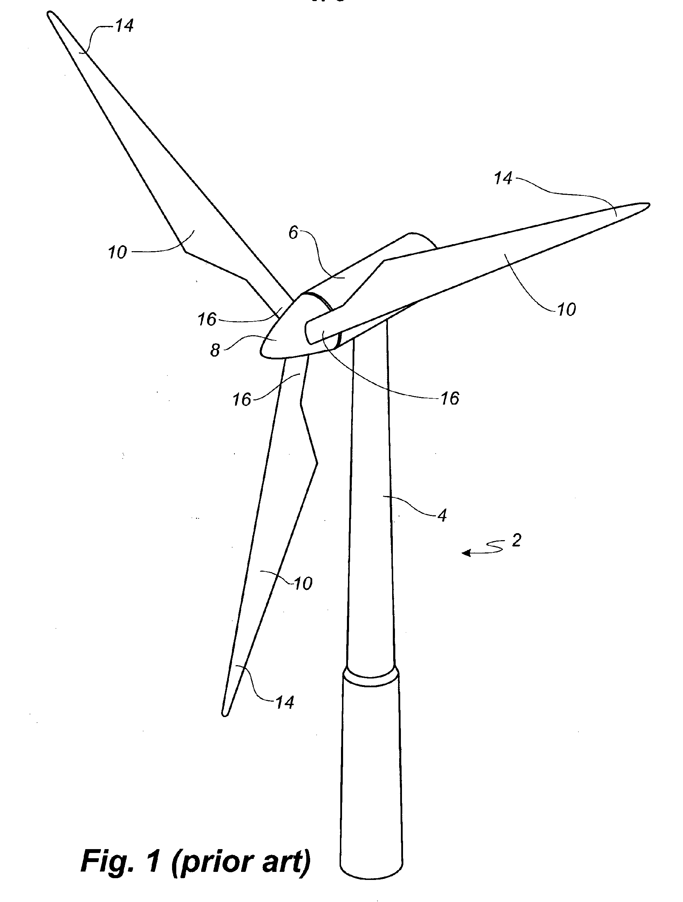

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub 8 and a blade tip 14 furthest from the hub 8.

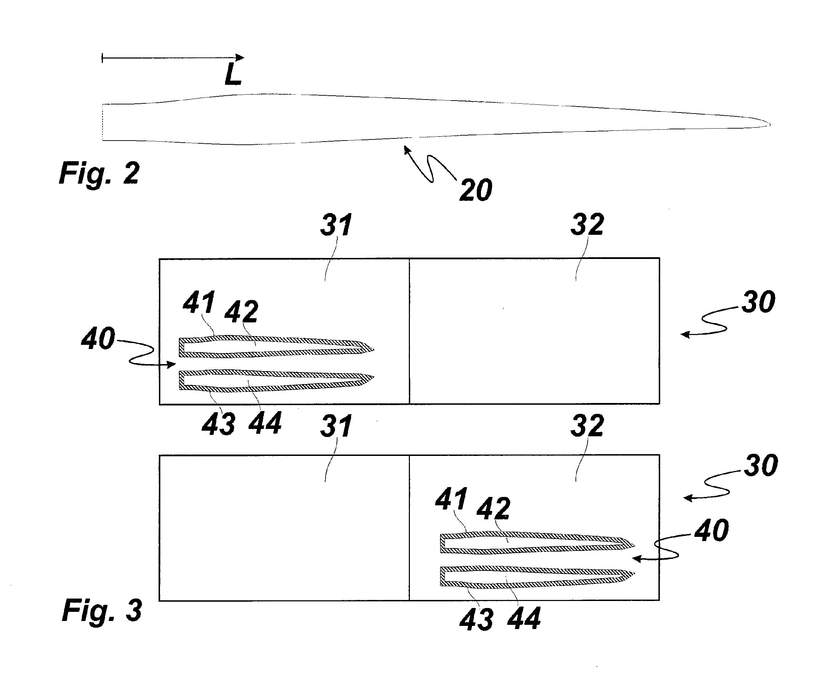

Fig. 2 illustrates a conventional wind turbine blade 20, which conventionally is manufactured either in one piece or in two pieces, where each of the two pieces has the same length in the longitudinal direction L as a wind turbine blade assembled by the two pieces.
Fig. 3 illustrates a manufacturing line 30 with a first work station 31 and a second work station 32 and a first mould 40 movable between the first work station 31 and the second work station 32. The first mould 40 comprises a first mould part 41 comprising a first mould cavity 42, the first mould cavity 42 corresponds to the envelope of the lower side of a wind turbine blade, e.g. the suction side of the blade, and a second mould part 43 having a second mould cavity 44 corresponding to the envelope of the upper side of a wind turbine blade, e.g. the pressure side of the blade. Separate manufacturing steps is carried out at each of the first work station 31 and the second work station 32. At the first work station 31 a manufacturing step a) is carried out. In this step fibre reinforcement material is arranged in each of the separate mould parts 41,43 of the first mould 40 that at this point in time, is located at the first work station 31. The arranging of fibre reinforcement material in each of the separate mould parts 41,43 in step a) can be carried out manually or in automated way, and can be done using a gantry, which is either shared by the separate mould parts 41,43 or by using separate gantries for each separate mould part 41,43. The mould cavities 42,44 of the mould parts 41,43 are normally coated with a gelcoat or the like before the fibre reinforcement material is arranged. The fibre reinforcement material may comprise fibres in many forms such as tows, mats, prepregs and preforms. The fibres may be of any material, but is preferably made of glass and/or carbon. Alternatively plant fibres or metallic fibres, such as steel fibres, may be utilised. After arranging the fibre reinforcement material, the first mould 40 is prepared for infusion of a curable matrix material. Typically, a VARTM process is used, and the separate mould parts 41, 43 is each prepared by arranging resin inlet channels on top of the fibre reinforcement material in each of the separate mould parts 41,43. Subsequently, each separate mould part 41,43 is covered and sealed by an air tight vacuum bag, thus creating a mould cavity. Thereby, a vacuum can be created between the mould part 41, 43 and the vacuum bag, so that the curable matrix material can be drawn into the mould cavity and impregnating the fibre reinforcement material via the resin inlet channels. The arrangement of the inlet channels and covering and sealing of each of the mould parts 41, 43 of the first mould 40 with a vacuum bag can be carried out during step a) or the first mould 40 can be moved to the second work station 32, where this step also can be carried out. The primary manufacturing step carried out at the second work station 32 is preferably supplying curable matrix material, e.g. a liquid resin, as described above. Typically, the matrix material is infused from the root area.

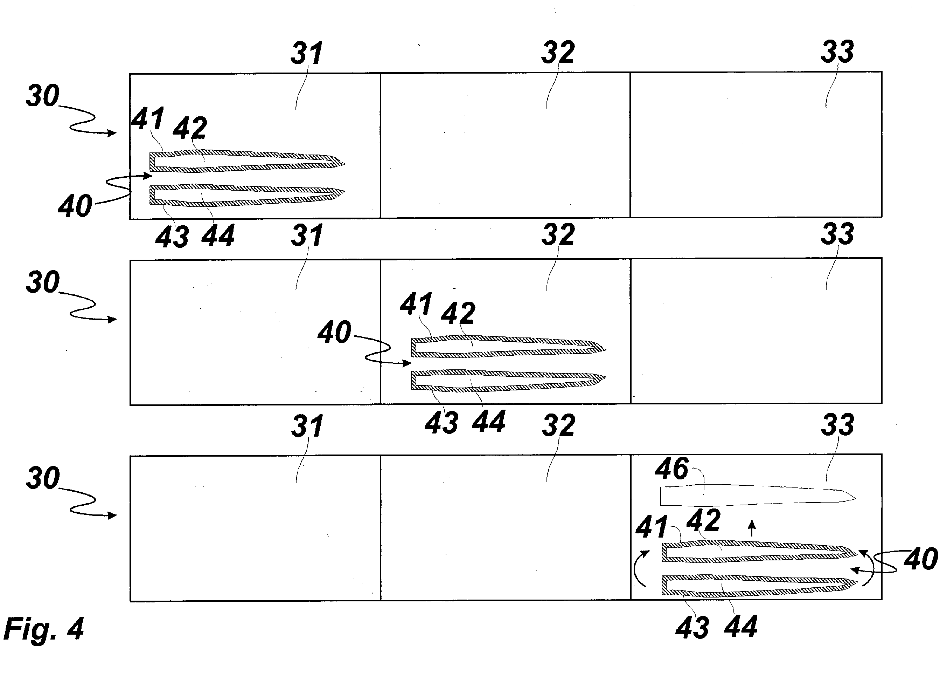

Fig. 4 illustrates a manufacturing line 30 similar to that depicted in Fig. 3. However, the manufacturing line 30 has been extended with a third work station 33 following the second work station 32. The first mould 40 is moved to the third work station 33 after the infusion of matrix material has been completed, but not necessarily before the matrix material is fully cured, and thus forming separate shell parts. When the first mould 40 has been moved to the third work station 33, the vacuum bags are first removed, after which some rework of the separate shell parts may be necessary before adhesive for joining the separate shell parts is applied and the separate mould parts 41,43 are assembled so that a closed mould assembly 46 is formed.

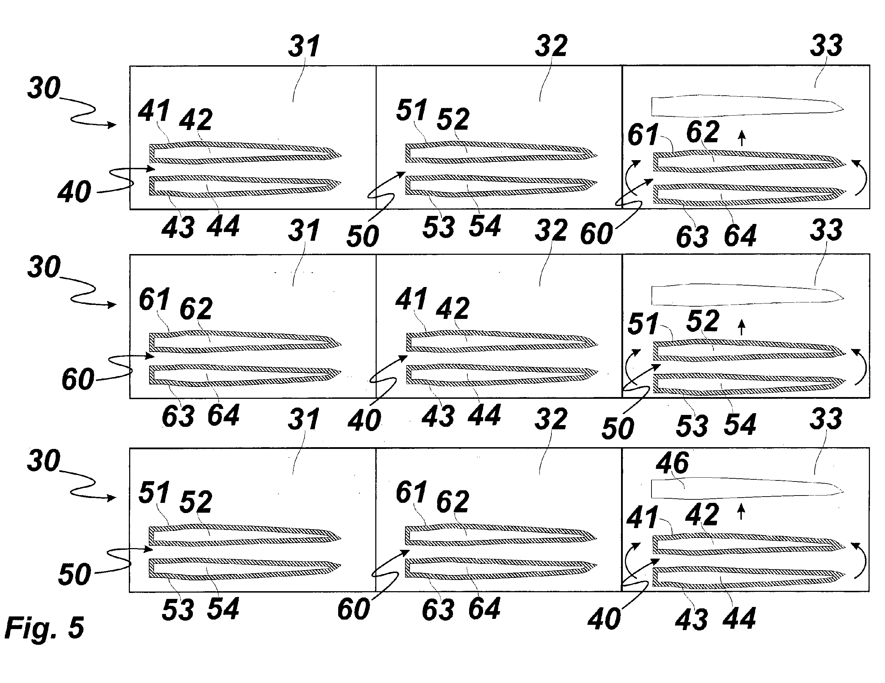

Fig. 5 illustrates a manufacturing line 30 as shown in Fig. 4, but with the addition of utilising a second mould 50 and a third mould 60 also, such that a continuous manufacturing line 30 is established. Thus step a) is performed at the first work station 31 substantially simultaneous with step c) being performed at the second work station 32, and step e) is performed substantially simultaneously at the third work station 33. After each of these steps are performed, step b), d) and f) are performed such that the first mould 40, the second mould 50 and the third mould 60 each are moved to the next work station, such that the continuous manufacturing line is established.

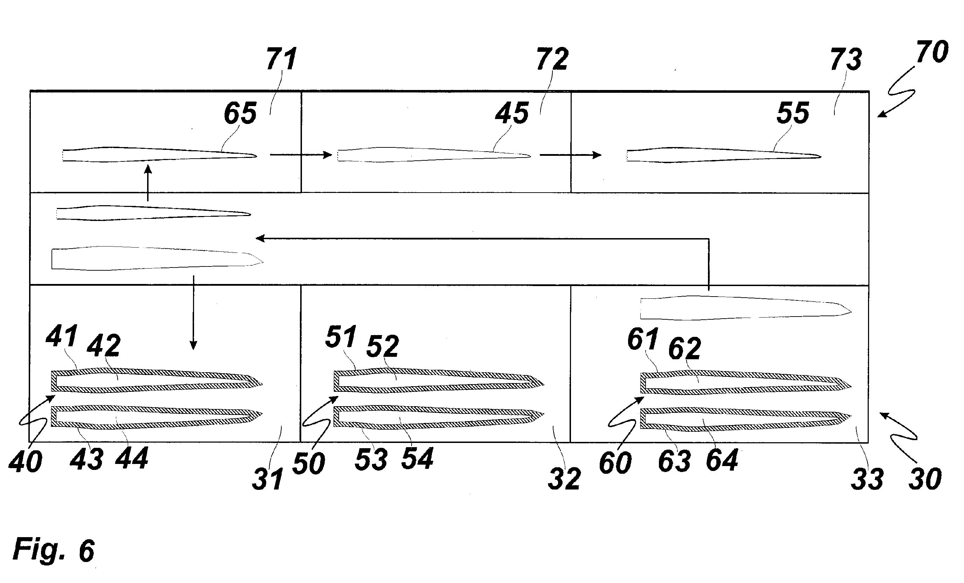

Fig. 6 illustrates the manufacturing line 30 as shown in Figs. 4 and 5, and a finalisation line 70 having a first finishing station 71, a second finishing station 72, and a third finishing station 73. At the first finishing station 71 a quality check of the manufactured wind turbine blade 45, 55, 65 is performed, while cutting and trimming of the manufactured wind turbine blade 45, 55, 65 is carried out at the second finishing station 72. At the third finishing station 73 the manufactured wind turbine blade 45, 55, 65 is coated with a paint. Fig. 6 illustrates a snap shot of the method having reached a steady state production of wind turbine blades. The first mould 40 is located at the first work station 31, where step a) is being performed, while the second mould 50 is located at the second work station 32, where step c) is being performed, and the third mould 60 is located at the third work station 33, where step e) is being performed. At the first finishing station 71, a third wind turbine blade 65 is located, which has been formed by the third mould 60, while at the second finishing station 72, a first wind turbine blade 45 is located which has been formed by the first mould 40, and finally at the third finishing station 73, a second wind turbine blade 55 is located, which has been formed by the second mould 50. The moulds 40, 50, 60 are thus circulated in a permutated manner between the first work station 31, the second work station 32 and the third work station 33, such that when a mould 40, 50, 60 leaves the third work station 33 it is returned to the first work station 31, which defines one circulation of moulds 40, 50, 60. The moulds are preferably transported to the first work station 31 as a closed mould assembly, whereafter the moulds 40, 50, 60 are opened and the manufactured wind turbine blade 45, 55, 65 is removed and moved to the first finishing station 71, while the separate mould parts 41, 43, 51, 53, 61, 63 are placed at the first work station 31. In Fig. 6, the manufacturing line 30 and the finalisation line 70 are parallel with a transport area in between. However, the manufacturing line 30 and the finalisation line 70 can also be juxtaposed, without having the transport area in between. The manufacturing line 30 and the finalisation line are preferably placed in one production facility, such that the handling is minimized.

It is worth noting that the moulds 40, 50, 60 may be moulds for different types of blades each having different process times associated with the different process steps required for producing the blades. In order to achieve an improved capacity utilisation of the manufacturing line 30, certain fixed steps are performed only at dedicated work stations and flexible steps between subsequent fixed steps to be performed at different work stations are switched forwards and backwards between these work stations depending on the availability of the work stations. The following table 1 gives one example of a process table for the moulding and assembly of a downwind and upwind shell of a wind turbine blade in a serial manufacturing line, wherein fixed and possibly flexible process steps are indicated.

**Table 1**

| DOWNWIND | UPWIND | TYPE |
|---|---|---|
| Mould preparation | Mould preparation | fixed |
| Gel-coat | Gel-coat | flexible |
| Gel-coat curing | Gel-coat curing | fixed |
| Glass lay-up 1 | Glass lay-up 1 | fixed |
| Balsa lay-up and Bushing | Balsa lay-up and Bushing | fixed |
| Glass lay-up 2 | Glass lay-up 2 | fixed |
| Infusion Media | Infusion Media | flexible |
| Vacuum | Vacuum | flexible |
| Resin Infusion | Resin Infusion | fixed |
| Curing | Curing | fixed |
| Debag | Debag | flexible |
| Close preparation | Close preparation | flexible |
| Adhesive shell base | | fixed |
| Insert web | | fixed |
| Adhesive web and flange | | fixed |
| Closure | | fixed |
| Adhesive curing | | fixed |
| Demoulding (blade to post-moulding) | | fixed |
| Clean-up | | flexible |

The method and the manufacturing line 30 can also be performed where the moulds 40, 50, 60 are closed before supplying curable matrix material, such that an integral wind turbine blade is formed, e.g. without a seam.

The invention has been described with reference to a preferred embodiment. However, the scope of the invention is not limited to the illustrated embodiment, and alterations and modifications can be carried out without deviating from the scope of the invention as defined in the appended claims.

### Reference numerals

- 2: wind turbine
- 4: tower
- 6: nacelle
- 8: hub
- 10: blade
- 14: blade tip
- 16: blade root
- 20: wind turbine blade
- 30: manufacturing line
- 31: first work station
- 32: second work station
- 33: third work station
- 40: first mould
- 41: first mould part (of first mould 40)
- 42: first mould cavity (of first mould part 41)
- 43: second mould part (of first mould 40)
- 44: first mould cavity (of second mould part 43)
- 45: wind turbine blade (shaped from the first mould 40)
- 46: closed mould assembly
- 50: second mould
- 51: first mould part (of second mould 50)
- 52: first mould cavity (of first mould part 51)
- 53: second mould part (of second mould 50)
- 54: first mould cavity (of second mould part 53)
- 55: wind turbine blade (shaped from the second mould 50)
- 60: third mould
- 61: first mould part (of third mould 60)
- 62: first mould cavity (of first mould part 61)
- 63: second mould part (of third mould 60)
- 64: first mould cavity (of second mould part 63)
- 65: wind turbine blade (shaped from the third mould 60)
- 70: finalisation line
- 71: first finishing station
- 72: second finishing station
- 73: third finishing station

## Claims

1. A method for manufacturing wind turbine blades having a length of at least 30 metres and having a composite shell structure comprising a matrix material and a fibre reInforcement material by use of vacuum assisted resin transfer moulding (VARTM), the wind turbine blades being formed in a number of moulds (40), each of the number of moulds (40) comprising at least a first mould part (41) and a second mould part (43), said mould parts being used to form separate shell parts adhered to each other to form a wind turbine blade, each of said shell parts being formed by arranging fibre-reinforcing material in a mould cavity of each mould part, each mould cavity being formed by sealing a vacuum bag to the mould part and coupling a vacuum source to each of the mould cavities so as to be evacuated prior to the injection of liquid curable matrix material, **characterised in that** the method comprises a manufacturing line (30) comprising a number of separate work stations (31, 32), where separate manufacturing steps are carried out, wherein the method comprises the following steps:
a) arranging the fibre reinforcement material in the mould cavities of the first mould part (41) and the second mould part (43) of a first mould (40) at a first work station (31),
b) moving the first mould part (41) and the second mould part (43) with the fibre reinforcement materials by use of conveying means to a second work station (32) having a different position than the first work station (31), and
c) supplying the liquid durable matrix material to the mould cavities of the first mould part (41) and the second mould part (43) at the second work station (32). '

2. A method according to claim 1, wherein the method comprises the following step:
d) moving the first mould part (41) and the second mould part, while the matrix material is curing, by conveying means from the second work station (32) to a third work station, (33) having a different position than the first (31) and the second work station (32).

3. A method according to claim 1 or 2, wherein the first mould part (41) and the second mould part (43) of the first mould can be assembled to form a closed mould assembly (46), each mould part (41, 43) comprising a mould cavity (42, 44).

4. A method according to claim 3, wherein the method comprises the following steps:
e) assembling the separate mould parts (41, 43) of the first mould (40) and applying an adhesive between the shell parts,
f) moving the first mould (40), while the adhesive is curing, by conveying means from the third work station (33) to the first work station (31).

5. A method according to any of the preceding claims, wherein the method comprises the following step:
g) opening the closed mould assembly (46) at the first work station (31) and removing the manufactured wind turbine blade (45).

6. A method according to any of the preceding claims, wherein the number of moulds (40, 50, 60) are at least the same as the number of work stations (31, 32, 33) on the manufacturing line (30), and the moulds (40, 50, 60) are circulated in a permutated manner between the work stations (31, 32, 33), such that a continuous manufacturing line (30) is established.

7. A method according to any of the preceding claims, wherein the process steps comprise one or more fixed process steps and/or one or more flexible process steps, wherein the fixed process steps are dedicated to a given work station (31, 32, 33) or a given type of work station, and the flexible process steps can be switched between work stations (31, 32, 33).

8. A method according to any of the preceding claims, wherein the moulds (40, 50, 60) are moved between work stations (31, 32, 33) according to a production scheme taking into account the cycle times of different types of blade to be produced concurrently and/or the actual time required for each process step of the blades to be produced concurrently.

9. A method according to any of the preceding claims, wherein the moulds (40, 60, 60) are moved substantially in a longitudinal direction (L) of the moulds, when being moved by the conveying means.

10. A method according to any of the preceding claims, wherein the fibre reinforcement material is dry, e.g. not pre-impregnated with resin, when arranged in the number of moulds (40, 50, 60).

11. A method according to any of the preceding claims, wherein the manufactured wind turbine blades have a length of at least 40 meters, or 50 meters.

12. A method according to any of the preceding claim, wherein the method further comprises a finalisation line (70) having a number of finishing stations (71,72,73).

13. A method according to any of the preceding claims, wherein the first work station (31) on the manufacturing line (30) and the first finishing station (71) on the finalisation line (70) are juxtaposed.

14. A method according to any of the preceding claims, wherein the wind turbine, blade is moved by crane means from the first work station (31) on the manufacturing line (30) to the first finishing station (71) on the finalisation line (70).

15. A method according to any of the preceding claims, wherein the number of moulds (40, 50, 60) have different shapes and/or length, such that the method produces wind turbine blades (45, 55, 65) with different properties.

## Patentansprüche

1. Verfahren zum Fertigen von Windkraftanlagenflügeln mit einer Länge von mindestens 30 Metern und mit einer ein Matrixmaterial und ein Faserverstärkungsmaterial aufweisenden Verbundstoffschalenstruktur durch Verwendung von vakuumunterstütztem Harzinjektionsformen (Vacuum Assisted Resin Transfer Moulding, VARTM), wobei die Windkraftanlagenflügel in einer Zahl von Formwerkzeugen (40) gebildet werden, wobei jedes der Zahl von Formwerkzeugen (40) mindestens ein erstes Formwerkzeugteil (41) und ein zweites Formwerkzeugteil (43) umfasst, wobei die Formwerkzeugteile dazu verwendet werden, getrennte Schalenteile zu bilden, die aneinander haften, um einen Windkraftanlagenflügel zu bilden, wobei die Schalenteile jeweils gebildet werden, indem Faserverstärkungsmaterial in einer Formwerkzeughöhlung jedes Formwerkzeugteils angeordnet wird, wobei jede Formwerkzeughöhlung gebildet wird, indem ein Vakuumbeutel an das Formwerkzeugteil gesiegelt wird und eine Vakuumquelle an jede der Formwerkzeughöhlungen gekoppelt wird, um vor dem Einspritzen von flüssigem aushärtbaren Matrixmaterial evakuiert zu werden, **dadurch gekennzeichnet, dass** das Verfahren eine Fertigungsstraße (30) umfasst, die eine Zahl getrennter Arbeitsstationen (31, 32) umfasst, an denen getrennte Fertigungsschritte ausgeführt werden, wobei das Verfahren die folgenden Schritte umfasst:
a) Anordnen des Faserverstärkungsmaterials in den Formwerkzeughöhlungen des ersten Formwerkzeugteils (41) und des zweiten Formwerkzeugteils (43) eines ersten Formwerkzeugs (40) an einer ersten Arbeitsstation (31),
b) Bewegen des ersten Formwerkzeugteils (41) und des zweiten Formwerkzeugteils (43) mit den Faserverstärkungsmaterialien unter Verwendung von Fördermitteln zu einer zweiten Arbeitsstation (32), die eine von der ersten Arbeitsstation (31) verschiedene Position aufweist, und
c) Zuführen des flüssigen aushärtbaren Matrixmaterials zu den Formwerkzeughöhlungen des ersten Formwerkzeugteils (41) und des zweiten Formwerkzeugteils (43) an der zweiten Arbeitsstation (32).

2. Verfahren nach Anspruch 1, wobei das Verfahren den folgenden Schritt umfasst:
d) Bewegen des ersten Formwerkzeugteils (41) und des zweiten Formwerkzeugteils, während das Matrixmaterial aushärtet, durch Fördermittel von der zweiten Arbeitsstation (32) zu einer dritten Arbeitsstation (33), die eine von der ersten (31) und der zweiten Arbeitsstation (32) verschiedene Position aufweist.

3. Verfahren nach Anspruch 1 oder 2, wobei das erste Formwerkzeugteil (41) und das zweite Formwerkzeugteil (43) des ersten Formwerkzeugs zusammengesetzt werden können, um eine geschlossene Formwerkzeugbaugruppe (46) zu bilden, wobei jedes Formwerkzeugteil (41, 43) eine Formwerkzeughöhlung (42, 44) umfasst.

4. Verfahren nach Anspruch 3, wobei das Verfahren die folgenden Schritte umfasst:
e) Zusammensetzen der getrennten Formwerkzeugteile (41, 43) des ersten Formwerkzeugs (40) und Aufbringen eines Klebstoffs zwischen den Schalenteilen,
f) Bewegen des ersten Formwerkzeugs (40), während der Klebstoff aushärtet, durch Fördermittel von der dritten Arbeitsstation (33) zu der ersten Arbeitsstation (31).

5. Verfahren nach einem der vorangehenden Ansprüche, wobei das Verfahren den folgenden Schritt umfasst:
g) Öffnen der geschlossenen Formwerkzeugbaugruppe (46) an der ersten Arbeitsstation (31) und Entnehmen des gefertigten Windkraftanlagenflügels (45).

6. Verfahren nach eine der vorangehenden Ansprüche, wobei die Zahl von Formwerkzeugen (40, 50, 60) mindestens gleich der Zahl von Arbeitsstationen (31, 32, 33) in der Fertigungsstraße (30) ist und die Formwerkzeuge (40, 50, 60) auf permutierte Weise zwischen den Arbeitsstationen (31, 32, 33) zirkuliert werden, so dass eine kontinuierliche Fertigungsstraße (30) gebildet wird.

7. Verfahren nach einem der vorangehenden Ansprüche, wobei die Prozessschritte einen oder mehrere feste Prozessschritte und/oder einen oder mehrere flexible Prozessschritte umfassen, wobei die festen Prozessschritte fest einer gegebenen Arbeitsstation (31, 32, 33) oder einer gegebenen Art von Arbeitsstation zugeordnet sind und die flexiblen Prozessschritte zwischen Arbeitsstationen (31, 32, 33) getauscht werden können.

8. Verfahren nach einem der vorangehenden Ansprüche, wobei die Formwerkzeuge (40, 50, 60) gemäß einem Produktionsprogramm zwischen Arbeitsstationen (31, 32, 33) bewegt werden, das die Zykluszeiten verschiedener Arten von gleichzeitig zu produzierenden Flügeln und/oder die tatsächliche Zeit, die für jeden Prozessschritt der gleichzeitig zu produzierenden Flügel benötigt wird, berücksichtigt.

9. Verfahren nach einem der vorangehenden Ansprüche, wobei die Formwerkzeuge (40, 50, 60) im Wesentlichen in einer Längsrichtung (L) der Formwerkzeuge bewegt werden, wenn sie von den Fördermitteln bewegt werden.

10. Verfahren nach einem der vorangehenden Ansprüche, wobei das Faserverstärkungsmaterial trocken ist, z. B. nicht mit Harz vorgetränkt, wenn es in der Zahl von Formwerkzeugen (40, 50, 60) angeordnet wird.

11. Verfahren nach einem der vorangehenden Ansprüche, wobei die gefertigten Windkraftanlagenflügel eine Länge von mindestens 40 Metern oder 50 Metern aufweisen.

12. Verfahren nach einem der vorangehenden Ansprüche, wobei das Verfahren weiter eine Fertigstellungstraße (70) mit einer Zahl von Endbearbeitungsstationen (71, 72, 73) umfasst.

13. Verfahren nach eine der vorangehenden Ansprüche, wobei die erste Arbeitsstation (31) in der Fertigungsstraße (30) und die erste Endbearbeitungsstation (71) in der Fertigstellungstraße (70) nebeneinandergestellt sind.

14. Verfahren nach einem der vorangehenden Ansprüche, wobei der Windkraftanlagenflügel mittels Kranmitteln von der ersten Arbeitsstation (31) in der Fertigungsstraße (30) zu der ersten Endbearbeitungsstation (71) in der Fertigstellungstraße (70) bewegt wird.

15. Verfahren nach einem der vorangehenden Ansprüche, wobei die Zahl von Formwerkzeugen (40, 50, 60) verschiedene Formen und/oder Längen aufweisen, so dass das Verfahren Windkraftanlagenflügel (45, 55, 65) mit unterschiedlichen Eigenschaften produziert.

## Revendications

1. Procédé de fabrication de pales de turbine éolienne ayant une longueur d'au moins 30 mètres et ayant une structure de coque composite comportant un matériau à matrice et un matériau de renfort de fibres par l'utilisation du moulage par transfert de résine assisté par le vide (VARTM), les pales de turbine éolienne étant formées dans un certain nombre de moules (40), chacun du nombre de moules (40) comportant au moins une première partie de moule (41) et une seconde partie de moule (43), lesdites parties de moule étant utilisées pour former des parties de coque séparées adhérées les unes aux autres pour former une pale de turbine éolienne, chacun desdites parties de coque étant formée en arrangeant du matériau de renfort de fibres dans une cavité de moule de chaque partie de moule, chaque cavité de moule étant formée en scellant un sac sous vide sur la partie de moule et en raccordant une source de vide sur chacune des cavités de moule à des fins d'évacuation avant l'injection du matériau à matrice durcissable liquide, **caractérisé en ce que** le procédé comporte une chaîne de fabrication (30) comportant un certain nombre de postes de travail séparés (31, 32), où des étapes séparées de fabrication sont effectuées, dans lequel le procédé comporte les étapes suivantes consistant à :
a) arranger le matériau de renfort de fibres dans les cavités de moule de la première partie de moule (41) et de la seconde partie de moule (43) d'un premier moule (40) au niveau d'un premier poste de travail (31),
b) déplacer la première partie de moule (41) et la seconde partie de moule (43) avec les matériaux de renfort de fibres par l'utilisation d'un moyen de transport jusqu'à un second poste de travail (32) ayant une différente position par rapport au premier poste de travail (31), et
c) alimenter le matériau à matrice durcissable liquide dans les cavités de moule de la première partie de moule (41) et de la seconde partie de moule (43) au niveau du second poste de travail (32).

2. Procédé selon la revendication 1, dans lequel le procédé comporte l'étape suivante consistant à :
d) déplacer la première partie de moule (41) et la seconde partie de moule, pendant que le matériau à matrice durcit, par un moyen de transport pour aller du second poste de travail (32) à un troisième poste de travail (33) ayant une différente position par rapport au premier poste de travail (31) et au second poste de travail (32).

3. Procédé selon la revendication 1 ou la revendication 2, dans lequel la première partie de moule (41) et la seconde partie de moule (43) du premier moule peuvent être assemblées pour former un ensemble de moule fermé (46), chaque partie de moule (41, 43) comportant une cavité de moule (42, 44).

4. Procédé selon la revendication 3, dans lequel le procédé comporte les étapes suivantes consistant à :
e) assembler les différentes parties de moule (41, 43) du premier moule (40) et appliquer un adhésif entre les parties de coque,
f) déplacer le premier moule (40), pendant que l'adhésif durcit, par un moyen de transport pour aller du troisième poste de travail (33) au premier poste de travail (31).

5. Procédé selon l'une quelconque des revendications précédentes, dans lequel le procédé comporte l'étape suivante consistant à :
g) ouvrir l'ensemble de moule fermé (46) au niveau du premier poste de travail (31) et retirer la pale de turbine éolienne fabriquée (45).

6. Procédé selon l'une quelconque des revendications précédentes, dans lequel le nombre de moules (40, 50, 60) est au moins identique au nombre de postes de travail (31, 32, 33) sur la chaîne de fabrication (30) et les moules (40, 50, 60) sont circulés de manière permutée entre les postes de travail (31, 32, 33), de manière à établir une chaîne de fabrication continue (30).

7. Procédé selon l'une quelconque des revendications précédentes, dans lequel les étapes du processus comportent une ou plusieurs étapes de processus fixes et/ou une ou plusieurs étapes de processus flexibles, dans lequel les étapes de processus fixes sont affectées à un poste de travail donné (31, 32, 33) ou un type de poste de travail donné, et les étapes de processus flexibles peuvent être échangées entre les postes de travail (31, 32, 33).

8. Procédé selon l'une quelconque des revendications précédentes, dans lequel les moules (40, 50, 60) sont déplacés entre les postes de travail (31, 32, 33) en fonction d'un programme de production prenant en compte les temps de cycle des différents types de pales devant être produites simultanément et/ou le temps réel nécessaire pour chaque étape de processus des pales devant être produites simultanément.

9. Procédé selon l'une quelconque des revendications précédentes, dans lequel les moules (40, 50, 60) sont déplacés sensiblement dans une direction longitudinale (L) des moules, quand ils sont déplacés par le moyen de transport.

10. Procédé selon l'une quelconque des revendications précédentes, dans lequel le matériau de renfort de fibres est sec, par exemple n'est pas pré-imprégné de résine, quand il est arrangé dans le nombre de moules (40, 50, 60).

11. Procédé selon l'une quelconque des revendications précédentes, dans lequel les pales de turbine éolienne fabriquées ont une longueur d'au moins 40 mètres, ou 50 mètres.

12. Procédé selon l'une quelconque des revendications précédentes, dans lequel le procédé comporte par ailleurs une chaîne de finalisation (70) ayant un certain nombre de postes de finition (71, 72, 73).

13. Procédé selon l'une quelconque des revendications précédentes, dans lequel le premier poste de travail (31) sur la chaîne de fabrication (30) et le premier poste de finition (71) sur la chaîne de finalisation (70) sont juxtaposés.

14. Procédé selon l'une quelconque des revendications précédentes, dans lequel la pale de turbine éolienne est déplacée au moyen d'une grue depuis le premier poste de travail (31) sur la chaîne de fabrication (30) jusqu'au premier poste de finition (71) sur la chaîne de finalisation (70).

15. Procédé selon l'une quelconque des revendications précédentes, dans lequel le nombre de moules (40, 50, 60) sont de formes et/ou de longueurs différentes, de sorte que le procédé produit des pales de turbine éolienne (45, 55, 65) ayant différentes propriétés.
